Europäisches Patentamt

European Patent Office

Office européen des brevets

(11) Numéro de publication : **0 326 460 B1**

# (12) FASCICULE DE BREVET EUROPEEN

(45) Date de publication du fascicule du brevet :
**19.08.92 Bulletin 92/34**

(21) Numéro de dépôt : **89400138.7**

(22) Date de dépôt : **18.01.89**

(51) Int. Cl.⁵ : **B29B 15/12,** B29C 67/14

(54) *Procédé et installation de fabrication d'un ruban constitué d'au moins un fil imprégné d'un polymère thermoplastique.*

(30) Priorité : **22.01.88 FR 8800890**

(43) Date de publication de la demande :
**02.08.89 Bulletin 89/31**

(45) Mention de la délivrance du brevet :
**19.08.92 Bulletin 92/34**

(84) Etats contractants désignés :
**DE GB IT NL**

(56) Documents cités :
**EP-A- 0 056 703**
**DE-A- 3 231 310**
**DE-A- 3 521 229**
**JP-A-60 180 938**
**JP-A-60 180 939**

(56) Documents cités :
**KUNSTSTOFFE, vol. 78, no. 2, février 1988, pages 126-131, Carl Hanser Verlag, Munich, DE; R. STOLZE: "Imprägniertechniken füraramid- und kohlenstoffaserverstärkte Thermoplaste"**
**PATENT ABSTRACTS OF JAPAN, vol. 7, no. 25 (M-190)[1170], 2 février 1983, page 120 M 190; & JP-A-57 181 825 (FURUKAWADENKI KOGYO K.K.) 09-11-1982**

(73) Titulaire : **INSTITUT TEXTILE DE FRANCE**
**280, avenue Aristide Briand B.P. 141**
**F-92223 Bagneux Cédex (FR)**

(72) Inventeur : **Loubinoux, Dominique**
**8, rue Arnoud**
**F-69005 Lyon (FR)**
Inventeur : **Lamure, Gérard**
**chemin du monderoux Beynost**
**F-01700 Miribel (FR)**

(74) Mandataire : **Descourtieux, Philippe et al**
**CABINET BEAU de LOMENIE 55 rue d'Amsterdam**
**F-75008 Paris (FR)**

EP 0 326 460 B1

## Description

La présente invention concerne la fabrication d'un ruban constitué d'au moins un fil imprégné d'un polymère, plus particulièrement d'un polymère thermoplastique, en vue notamment de son utilisation dans la réalisation de matériaux composites.

Dans ce qui suit on désigne sous le terme ruban un élément de longueur indéfinie, de petite largeur, par exemple de quelques millimètres à quelques centimètres, constitué d'un fil multifilamentaire, ou d'une nappe de fils multifilamentaires, imprégné d'un polymère jouant le rôle de matrice. Ce type de ruban sert de base pour la réalisation de matériaux composites, il est par exemple mis en forme par tissage, tricotage, tressage et le produit composite final est obtenu par un traitement thermique subséquent: pultrusion, enroulement filamentaire, compression.

La majorité des matériaux composites à matrice organique sont élaborés à partir de fils noyés dans une résine thermodurcissable ; les fils sont principalement en verre, carbone ou aramide, les résines sont principalement des époxydes, des polyesters, des résines phénoliques et des polyuréthannes. Ces résines thermodurcissables sont mises en oeuvre en solution ou sous forme de monomères, avec une faible viscosité ce qui assure une très bonne imprégnation de chaque filament constitutif des fils de renforts. Ces matériaux composites ont de bonnes propriétés mécaniques tant en élongation qu'en cisaillement . Cependant ils présentent un inconvénient sur le plan mécanique , à savoir une certaine fragilité ou choc et , par ailleurs, compte-tenu de la cinétique de réticulation des résines thermodurcissables mises en oeuvre, le temps nécessaire à leur fabrication est important.

On a déjà cherché à pallier ces inconvénients en réalisant des matériaux composites à partir de résines non plus thermodurcissables mais thermoplastiques. En effet la mise en oeuvre de ces résines est plus simple, leur tenue au choc et leur résistance à la fatigue sont meilleures. Toutefois, elles ont, à l'état fondu, une forte viscosité qui empêche une bonne pénétration à coeur des fils de renfort et donc un enrobage homogène par la résine des multifilaments constituant chaque fil de renfort. Dans certains cas limités, permettant la mise en oeuvre de moyens techniques particuliers, on peut obtenir une bonne pénétration à coeur en travaillant à des pressions élevées, c'est le cas des techniques dites d'injection et de compression.

Pour les autres techniques, par exemple l'enroulement filamentaire,la pultrusion ou le pulforming, la qualité des pièces composites obtenues dépend essentielleent de la qualité de l'imprégnation à coeur et homogène des fils de renfort.

On connaît par les brevets français N° 74.01.975, 83.03.938, 81.07.971, des procédés visant à obtenir une bonne imprégnation des fils de renfort par la résine thermoplastique. Selon ces procédés, le polymère thermoplastique se présente sous la forme d'une poudre que l'on fait pénétrer dans le fil par différentes techniques (électrostatique,suspension, lit fluidisé).Cette poudre doit avoir une granulométrie bien contrôlée centrée autour de 10 à 15 microns. Dans le brevet français N°84.05.627 , le fil dont les filaments sont entourés de la poudre thermoplastique est ensuite revêtu d'une gaine ayant pour effet de bloquer la poudre à l'intérieur du fil et donc éviter la détérioration du fil lors de la confection du produit composite.

Ces nouveaux procédés sont d'application restreinte, du fait que peu de polymères thermoplastiques se présentent sous la forme de poudres calibrées.

Selon le demandeur , il importe d'assurer une pénétration homogène de la matière thermoplastique, nécessaire à une cohésion parfaite des filaments et de la matière thermoplastique.

Or on a trouvé et c'est ce qui fait l'objet de l'invention, un procédé de fabrication d'un ruban constitué d'au moins un fil multifilamentaire imprégné à coeur d'un polymère thermoplastique qui pallie les inconvénients constatés. Le procédé de l'invention consiste dans les étapes suivantes :

    a. on réalise un gainage contrôlé du (ou des) fil par le polymère thermoplastique,

    b. et on fait passer en défilement continu le (ou les fils) fil ainsi gainé entre deux cylindres de pression, tandis que, simultanément, on chauffe le polymère de gainage pour qu'il soit dans son état plastique.

Le gainage du fil par le polymère thermoplastique a pour but d'apporter sur le fil une quantité déterminée de polymère , au moins nécessaire à un enrobage homogène des filaments constitutifs du fil de renfort. Le passage du fil entre les deux cylindres a pour but de faire pénétrer le polymère entre les filaments, alors que ledit polymère est dans son état plastique. Cette dernière condition est absolument indispensable pour une bonne pénétration par un simple calandrage entre deux cylindres de pression , comme cela est préconisé dans le procédé de l'invention. De plus ce calandrage donne au fil la forme d'un ruban plat.

De préférence le gainage contrôlé du fil par le polymère thermoplastique est réalisé par passage du fils dans la filière de gainage d'une extrudeuse, alimentée par le polymère thermoplastique sous forme de granulés. Ainsi le polymère est au départ dans sa forme la plus courante et la moins coûteuse, contrairement aux procédés l'utilisant sous forme de poudre calibrée.

Lors de son passage entre les deux cylindres, le polymère constituant la gaine du fil doit être dans son état plastique. Cela est obtenu, par exemple, par passage du fil gainé entre deux cylindres dont l'un au moins est porté à une température au moins égale à la température de fusion du polymère thermoplastique. Dans le cas où l'on utilise comme polymère thermoplastique du polypropylène, la température des cylindres est de l'ordre de 200°C.

Selon une version préférée du procédé de l'invention, la mise dans son état plastique du polymère est obtenue par action des ultra-sons lors du passage du fil gainé entre les deux cylindres.

De préférence la force excercée transversalement au fil par les deux cylindres de pression est de l'ordre de 300 à 500 N au centimètre de fil.

C'est un autre objet de l'invention que de protéger une installation spécialement conçue pour la mise en oeuvre du procédé précité. Cette installation comprend un dispositif de gainage capable de réaliser un gainage contrôlé d'un fil multifilamentaire par un polymère thermoplastique et un ensemble d'imprégnation comportant un jeu de deux cylindres de pression assortis de moyens pour amener le polymère dans son état plastique.

De préférence le dispositif de gainage consiste en une extrudeuse alimentée en polymère sous forme de granulés et comportant une filière de gainage . L'ensemble d'imprégnation consiste par exemple en un jeu de deux cylindres chauffants, du type calandre.

Dans un mode préféré de réalisation de l'installation de l'invention, l'ensemble d'imprégnation consiste en un jeu de deux cylindres de pression dont l'un est une sonotrode rotative reliée à un générateur d'ultrasons et l'autre constitue l'enclume correspondant à la sonotrode.

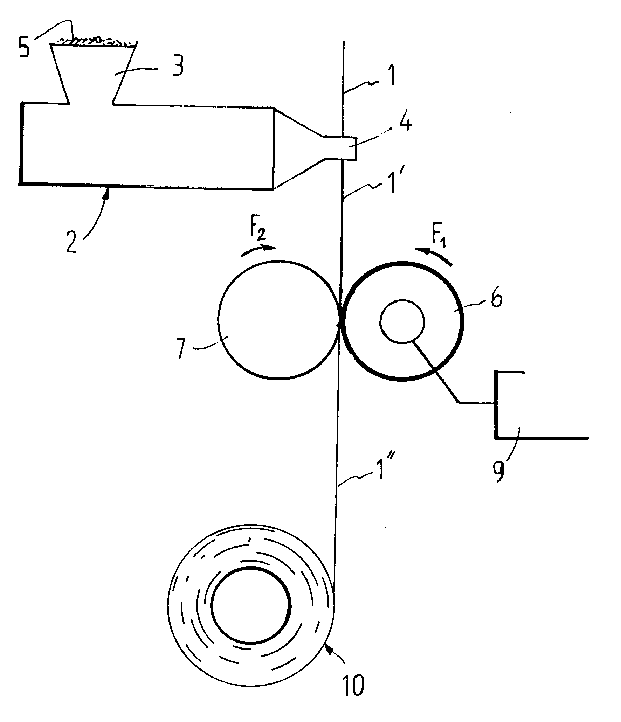

L'invention sera mieux comprise à la lecture de la description qui va maintenant être faite d'un exemple de réalisation de l'installation de fabrication d'un ruban plat constitué d'au moins un fil multifilamentaire imprégné d'un polymère thermoplastique, illustrée par le dessin annexé dont la figure unique est une représentation schématique en coupe d'une installation équipée d'une sonotrode.

Le fil 1 est alimenté à partir d'une installation non représentée. Il s'agit d'un fil destiné à servir de renfort dans la réalisation d'un matériau composite à matrice thermoplastique. Il est de préférence dans une matière minérale telle que silice, verre, carbone. Son titre est compris par exemple entre 50 et 1.200 tex. Bien sûr l'ensimage dont le fil 1 est imprégné lors de sa fabrication est déterminé pour être compatible avec le polymère thermoplastique qui a été choisi pour constituer la matrice du matériau composite.

L'extrudeuse 2 est un matérial conventionnel, avec sa trémis d'alimentation 3 et sa filière 4 de sortie. La filière 4 est une filière de gainage du type câbleur électrique avec poinçon et filière adaptés aux fils fragiles. Elle est équipée d'un guide-fil en céramique de manière à ne pas endommager le fil 1. Le diamètre intérieur du poinçon de la filière est de 1,9 mm.

Le polymère thermoplastique est choisi parmi une gamme très étendue de produits, par exemple les polyamides, les polyesters, le polypropylène, le polyéthylène, le polychlorure de vinyle , les polyacétals, le polyfluorure de vinylydène, le polysulfure de phénylène, le polyétheréthercétone, les polysulfones, le polycarbonate, le polystyrène.

Le polymère est introduit sous forme de granulés 5 dans la trémis 3 puis est amené dans les différents corps de chauffe de l'extrudeuse 2 jusqu'à la filière de gainage 4. Le corps intérieur de l'extrudeuse 2 a un diamètre de 30 mm, et la vis tourne à 15 tours par minute.

Les cylindres de pression 6 et 7 sont placés sous la filière 4 de telle sorte que leur ligne de tangence soit dans le plan vertical passant par la filière 4. L'un des cylindres 6 est en lui-même une sonotrode rotative , relié à un générateur 9, l'autre 7 sert d'enclume à la sonotrode 6. Ils ont un diamètre extérieur de 130 mm.

Un système de réception du ruban est placé sous les cylindres 6 et 7, par exemple un bobinoir de renvidage. On n'a représenté sur la figure que la bobine 10.

Le fonctionnement de l'installation est le suivant. Le fil multifilamentaire 1 provenant d'une bobine de filature est amené jusqu'à la filière de gainage 4. Dans son passage à travers la filière 4, le fil 1 emporte sous forme d'une gaine une certaine quantité de polymère thermoplastique à l'état fondu. Le fil ainsi gainé 1' passe ensuite entre les deux cylindres 6 et 7 qui tournent autour de leurs axes horizontaux en sens inverse l'un de l'autre, selon la direction des flèches F1 et F2. La vitesse de rotation des cylindres est déterminée de telle sorte que leur vitesse périphérique soit égale à la vitesse de bobinage du ruban 1″ sur la bobine 10. Lors de son passage entre les deux cylindres 6 et 7, le fil gainé 1' est soumis à une double action : la première correspond à l'action des ultrasons engendrés entre la sonotrode 6 et l'enclume 7 et la seconde à la pression exercée par les deux cylindres 6 et 7 appliqués l'un contre l'autre. Les ultrasons provoquent le réchauffement immédiat du polymère et la puissance de la sonotrode est déterminée pour que le polymère thermoplastique atteigne son état plastique. Simultanément, la pression exercée par les cylindres force le polymère à l'état plastique à pénétrer à coeur dans le fil et à enrober de façon homogène chacun des filaments ; le fil 1″ prend la forme plate d'un ruban . Ce ruban 1″ est enroulé sous forme d'une bobine 10.

A titre d'exemple, un fil de verre E de 320 Tex a été imprégné à l'aide de polypropylène de grade 35. Les températures respectives des trois corps de chauffe de l'extrudeuse 2 étaient successivement de 210, 230 et 240°C, la température de la filière 4 de 250°C. La sonotrode avait une puissance de 1,2 kW à une fréquence de 20 kHz. Le fil à plat entre les cylindres de pression avait une largeur de 2,5 mm et la force exercée transversalement par les deux cylindres de pression était de 120 N.Le ruban 1″ obtenu comportait une proportion de 50 % de polypropylène en poids. Sa résistance à la traction était de 15,5 daN et son allongement à la rupture de 2,6 %.

Dans un autre exemple, le fil de verre faisait 1.200 Tex, le polypropylène avait un grade de 250, la force exercée par les deux cylindres était de 120 N, mais le fil à plat avait une largeur de 4 mm.

L'installation équipée d'une sonotrode qui vient d'être décrite est particulièrement avantageuse dans la mesure où le réchauffement par ultrasons du polymère thermoplastique , intervenant simultanément dans toute la masse polymère, peut être contrôlé en sorte que le polymère a l'état plastique n'adhère pas aux cylindres 6 et 7 . Ainsi la quantité de polymère déposée sur le fil 1′ après passage dans la filière 4 se retrouve exactement sur le ruban 1″ après passage entre les deux rouleaux. Par ailleurs, les ultrasons favorisent l'imprégnation à coeur du fil multi-filamentaire par le polymère à l'état plastique.

Dans une autre version de l'installation, dans laquelle les deux cylindres 6 et 7 sont des cylindres chauffés à 200°C, le même fil de verre de départ a conduit à un ruban 1″ comportant une proportion de 35 % de polypropylène en poids. Sa résistance à la traction était de 16,3 daN et son allongement à la rupture de 2,5 %.

Les rubans 1″ obtenus sont en particulier utilisés dans la réalisation de matériaux composites. De tels matériaux seront réalisés soit à partir des bobines 10 de ruban , soit même directement à l'aide du ruban 1″ sortant des cylindres 6 et 7 par la technique de l'enroulement filamentaire.Les matériaux composites réalisés à l'aide de ces rubans 1″ pourront être à renforts unidirectionnels dans le cas de la pultrusion, ou à renforts multidirectionnels dans le cas de mise en oeuvre par tissage ou assemblage des rubans dans plusieurs directions suivis d'une compression à chaud.

## Revendications

1. Procédé de fabrication d'un ruban constitué d'au moins un fil multifilamentaire imprégné à coeur d'un polymère thermoplastique caractérisé en ce que :
   a. on réalise un gainage contrôlé du (ou des) fil (1) par le polymère thermoplastique,
   b. puis on fait passer en défilement continu le (ou les fils) fil ainsi gainé (1′) entre deux cylindres (6,7) de pression, tandis que simultanément on chauffe le polymère de gainage pour que celui-ci soit dans son état plastique.
2. Procédé selon la revendication 1 caractérisé en ce que le gainage contrôlé du fil par le polymère thermoplastique est réalisé par passage du fil (1) dans la filière de gainage (4) d'une extrudeuse (2) alimentée par le polymère thermoplastique sous forme de granulés (5).

3. Procédé selon l'une des revendications 1 ou 2 caractérisé en ce qu'on fait passer le fil gainé (1′) entre deux cylindres (6,7) dont l'un au moins est porté à une température au moins égale à la température de fusion du polymère thermoplastique.

4. Procédé selon l'une des revendications 1 ou 2 caractérisé en ce que le chauffage du polymère de gainage est obtenu par l'action d'ultrasons lors du passage du fil gainé (1′) entre les deux cylindres (6,7).

5. Procédé selon la revendication 1 caractérisé en ce que la force exercée transversalement sur le fil (1) par les cylindres de pression est de l'ordre de 300 à 500 N par centimètre de fil.

6. Installation pour la mise en oeuvre du procédé selon la revendication 1 caractérisé en ce qu'elle comprend un dispositif de gainage (2,4) capable de réaliser un gainage contrôlé d'un fil (1) multifilamentaire par un polymère thermoplastique et un ensemble d'imprégnation comportant un jeu de deux cylindres (6,7) de pression assortis de moyens pour amener le polymère dans son état plastique.

7. Installation selon la revendication 6 caractérisée en ce que le dispositif de gainage consiste en une extrudeuse (2) alimentée en polymère sous forme de granulés (5) et comportant une filière de gainage (4).

8. Installation selon l'une des revendications 6 ou 7 caractérisée en ce que l'ensemble d'imprégnation consiste en un jeu de deux cylindres (6,7) chauffants , du type calandre.

9. Installation selon l'une des revendications 6 ou 7 caractérisée en ce que l'ensemble d'imprégnation consiste en un jeu de deux cylindres (6,7) dont l'un (6) est une sonotrode rotative reliée à un générateur (9) d'ultrasons et dont l'autre (7) sert d'enclume à la sonotrode (6).

## Patentansprüche

1. Verfahren zur Herstellung eines Bandes, das aus mindestens einem multifilamentären imprägnierten Faden im Inneren eines thermoplastischen Polymers besteht, dadurch **gekennzeichnet**, daß man:
   a) eine kontrollierte Umhüllung des Fadens bzw. der Fäden (1) mit dem thermoplastischen Polymer durchführt und
   b) anschließend den bzw. die so umhüllten Fäden (1′) in kontinuierlicher Abwicklung zwischen zwei Druckwalzen (6, 7) hindurchführt, während man gleichzeitig das zur Umhüllung dienende Polymer erhitzt, um es in plastischen Zustand zu bringen.

2. Verfahren nach Anspruch 1, dadurch gekennzeichnet, daß die kontrollierte Umhüllung des Fadens mit dem thermoplastischen Polymer durchgeführt wird, indem der Faden (1) durch die zur Umhüllung dienende Düse (4) einer Strangpresse (2), die mit dem thermoplastischen Polymer in Form von Granulat (5) beschickt wird, hindurchgeführt wird.

3. Verfahren nach Anspruch 1 oder 2, dadurch gekennzeichnet, daß man den umhüllten Faden (1') zwischen zwei Walzen (6, 7) hindurchführt, von denen mindestens eine auf einer Temperatur gehalten wird, die mindestens gleich der Schmelztemperatur des thermoplastischen Polymers ist.

4. Verfahren nach Anspruch 1 oder 2, dadurch gekennzeichnet, daß das Erhitzen des zur Umhüllung dienenden Polymers durch Einwirkung von Ultraschall während des Hindurchführens des umhüllten Fadens (1') zwischen den beiden Walzen (6, 7) vorgenommen wird.

5. Verfahren nach Anspruch 1, dadurch gekennzeichnet, daß die von den Druckwalzen in Querrichtung auf den Faden (1) ausgeübte Kraft in der Größenordnung von 300 bis 500 N pro Zentimeter Faden liegt.

6. Einrichtung für die Durchführung des Verfahrens nach Anspruch 1, dadurch gekennzeichnet, daß sie eine Vorrichtung zur Umhüllung (2, 4), mit der eine kontrollierte Umhüllung eines multifilamentären Fadens (1) mit einem thermoplastischen Polymer durchgeführt werden kann, und eine Imprägniereinheit mit einem Satz von zwei Druckwalzen (6, 7) aufweist, die Mittel aufweisen, um das Polymer in den plastischen Zustand zu überführen.

7. Einrichtung nach Anspruch 6, dadurch gekennzeichnet, daß die Vorrichtung zur Umhüllung aus einer Strangpresse (2) besteht, die mit Polymer in Form von Granulat (5) beschickt wird und eine zur Umhüllung dienende Düse (4) aufweist.

8. Einrichtung nach Anspruch 6 oder 7, dadurch gekennzeichnet, daß die Imprägniereinheit aus einem Satz von zwei beheizten Walzen (6, 7) vom Typ eines Kalanders besteht.

9. Einrichtung nach Anspruch 6 oder 7, dadurch gekennzeichnet, daß die Imprägniereinheit aus einem Satz von zwei Walzen (6, 7) besteht, von denen eine Walze (6) eine mit einem Ultraschallgenerator (9) verbundene Sonotrode ist und die andere Walze (7) mit der Sonotrode (6) in Arbeitskontakt steht.

b. then the yarn (or yarns) thus sheathed (1') is advanced continuously between two pressure rollers (6, 7) whilst the sheathing polymer is simultaneously heated so that it is in its plastics state.

2. Process according to claim 1, characterized in that the controlled sheathing of the yarn by the thermoplastic polymer is effected by passage of the yarn (1) in the sheathing die (4) of an extruding machine (2) supplied by the thermoplastics polymer in the form of granules (5).

3. Process according to one of claims 1 or 2, characterized in that the sheathed yarn (1') is passed between two rollers (6, 7) of which at least one is taken to a temperature at least equal to the temperature of melting of the thermoplastics polymer.

4. Process according to one of claims 1 or 2, characterized in that heating of the sheathing polymer is obtained by the action of ultra-sounds during the passage of the sheathed yarn (1') between the two rollers (6, 7).

5. Process according to claim 1, characterized in that the force exerted transversely on the yarn (1) by the pressure rollers is of the order of 300 to 500 N per centimeter of yarn.

6. Installation for carrying out the process according to claim 1, characterized in that it comprises a sheathing device (2, 4) capable of effecting a controlled sheathing of a multi-filament yarn (1) by a thermoplastics polymer and an impregnation assembly comprising a set of two pressure rollers (6, 7) provided with means for taking the polymer into its plastic state.

7. Installation according to claim 6, characterized in that the sheathing device consists of an extruding machine (2) supplied with polymer in the form of granules (5) and comprising a sheathing die (4).

8. Installation according to one of claims 6 or 7, characterized in that the impregnation assembly consists of a set of two heating rollers (6, 7) of the calender type.

9. Installation according to one of claims 6 or 7, characterized in that the impregnation assembly consists of a set of two rollers (6, 7) of which one (6) is a rotating sonotrode connected to an ultra-sound generator (9) and of which the other (7) serves as anvil for the sonotrode (6).

**Claims**

1. Process for manufacturing a ribbon constituted by at least one multi-filament yarn thoroughly impregnated with a thermoplastics polymer, characterized in that:

    a. a controlled sheathing of the yarn (1) (or yarns) by the thermoplastics polymer is effected,